Europäisches Patentamt

European Patent Office

Office européen des brevets

(11) Veröffentlichungsnummer: **0 283 008 B1**

(12) **EUROPÄISCHE PATENTSCHRIFT**

(45) Veröffentlichungstag der Patentschrift: **22.07.92**

(21) Anmeldenummer: **88104252.7**

(22) Anmeldetag: **17.03.88**

(51) Int. Cl.⁵: **C08L 83/06**, C08L 83/08

(54) **Durch Bestrahlung vernetzbare Zusammensetzungen.**

(30) Priorität: **19.03.87 DE 3708958**

(43) Veröffentlichungstag der Anmeldung:
**21.09.88 Patentblatt 88/38**

(45) Bekanntmachung des Hinweises auf die
Patenterteilung:
**22.07.92 Patentblatt 92/30**

(84) Benannte Vertragsstaaten:
**AT BE CH DE ES FR GB IT LI NL**

(56) Entgegenhaltungen:
**DE-A- 3 402 317**
**DE-A- 3 433 654**

(73) Patentinhaber: **WACKER-CHEMIE GMBH**
**Hanns-Seidel-Platz 4**
**W-8000 München 83(DE)**

(72) Erfinder: **Preiner, Gerhard, Dr. Dipl.-Chem.**
**Karl-Gross-Strasse 17**
**W-8263 Burghausen(DE)**
Erfinder: **Hockemeyer, Friedrich, Dipl.-Ing.**
**Lärchenstrasse 22**
**W-8261 Marktl(DE)**
Erfinder: **Burger, Christa, Dr. Dipl.-Chem.**
**Stadtplatz 95/96**
**W-8263 Burghausen(DE)**

Rank Xerox (UK) Business Services

**Beschreibung**

Durch Bestrahlung vernetzbare Zusammensetzungen für die Herstellung von klebrige Stoffe abweisenden Überzügen sind bereits bekannt. Hierzu wird z.B. auf US 4,064 027 (ausgegeben 20. Dez. 1977, G.A.L. Gant, Dow Corning Corporation) und US 4 571 349 (ausgegeben 18. Feb. 1986, F. Hockemeyer et al., Wacker-Chemie GmbH) verwiesen.

Es bestand nun die Aufgabe, durch Bestrahlung vernetzbare Zusammensetzungen für die Herstellung von Klebstoffe abweisenden Überzügen der in US 4 571 349 beanspruchten Art bereitzustellen, die durch einen Zusatz Überzüge mit einem erhöhten, auch nach einiger Lagerung noch gleichbleibenden Trennwert ergeben, sodaß sich mit einem derartigen Überzug beschichtetes Papier z.B. von mit druckempfindlichem Klebstoff beschichtetem Papier, etwa einem Preisauszeichnungs-Etikett, nicht zu einem unerwünschten Zeitpunkt ablöst, wobei das Ausmaß der Erhöhung des Trennwerts vorbestimmt werden kann und durch den Zusatz zur Erhöhung des Trennwerts keine Verringerung der Vernetzungsgeschwindigkeit der durch Bestrahlung vernetzbaren Zusammensetzungen bewirkt wird, wobei die Geruchsbelästigung durch diese Zusammensetzungen bei ihrer Verarbeitung besonders gering ist und diese Zusammensetzungen bei Bestrahlung besonders rasch vernetzen. Diese Aufgabe wird durch die Erfindung gelöst.

Gegenstand der Erfindung sind durch Bestrahlung vernetzbare Zusammensetzungen für die Herstellung von Klebstoffe abweisenden Überzügen auf Grundlage von Organopolysiloxan, worin mindestens 95 Molprozent der Siloxaneinheiten solche der Formel

$$HR^1C = CR^2COOR^3R_2SiO_{1/2} \ ,$$

worin R ein einwertiger, gegebenenfalls halogenierter Kohlenwasserstoffrest, $R^1$ Wasserstoff oder ein gegebenenfalls halogenierter Phenylrest, $R^2$ Wasserstoff oder ein Alkylrest mti 1 bis 4 Kohlenstoffatomen je Rest und $R^3$ ein zweiwertiger, gegebenenfalls halogenierter Kohlenwasserstoffrest ist, wobei 2 solcher Siloxaneinheiten je Molekül vorliegen, der Formel

$$HSR^4SiRO \ ,$$

worin R die oben dafür angegebene Bedeutung hat und $R^4$ ein zweiwertiger Kohlenwasserstoffrest ist, sowie der Formel

$$R_2^5SiO \ ,$$

worin $R^5$ die gleiche Bedeutung wie R hat oder ein durch eine Gruppe der Formel $HR^1C = CR^2COO-$ ($R^1$ und $R^2$ haben jeweils die oben dafür angegebene Bedeutung) substituierter Kohlenwasserstoffrest ist, sind und wobei mindestens 95% der Anzahl der an Silicium gebundenen Sauerstoffatome bei den Siloxaneinheiten mit der HS-Gruppe in der Gruppierung

$$\equiv SiOSi\equiv$$

vorliegen, dadurch gekennzeichnet, daß diese Zusammensetzungen zusätzlich zu Organopolysiloxan der vorstehend definierten Art mindestens ein Organopolysiloxan aus Einheiten der Formeln

$$R_3^6SiO_{1/2} \quad \text{und}$$
$$R^6SiO_{3/2} \quad \text{und/oder}$$
$$SiO_{4/2} \ ,$$

worin 0,5 bis 50 % der Anzahl der Reste $R^6$ solche der Formel

$$HSR^4-$$

($R^4$ hat die oben dafür angegebene Bedeutung) sind, während die übrigen Reste $R^6$ die gleiche Bedeutung wie $R^5$ haben, enthalten.

Organopolysiloxane aus Einheiten der Formeln

$$R_3^6SiO_{1/2} \quad \text{und}$$
$$R^6SiO_{3/2}$$

werden zwar von in der eingangs erwähnten US 4 064 027, Anspruch 13, offenbarten Organopolysiloxanen umfasst, US 4 064 027 offenbart jedoch keine Organopolysiloxane mit Einheiten der Formeln

$HR^1C = CR^2COOR^3R_2SiO_{1/2}$ ,
$HSR^4SiRO$ und $R_2^5 SiO$

der vorstehend definierten Art. Außerdem war US 4 064 027 nicht zu entnehmen, daß Organopolysiloxane aus Einheiten der Formeln $R_3^6 SiO_{1/2}$ und $R^6SiO_{3/2}$ den Trennwert erhöhen können.

Vorzugsweise haben die Organopolysiloxane mit Einheiten der Formeln

$HR^1C = CR^2COOR^3R_2SiO_{1/2}$
$HSR^4SiRO$ und $R_2^5 SiO$

der vorstehend definierten Art eine Viskosität von 50 bis 10 000 mPa.s bei 25°C.

Beispiele für Kohlenwasserstoffreste R und $R^5$ sind Alkylreste mit 1 bis 18 Kohlenstoffatomen je Rest, wie der Methyl-, Ethyl-, n-Propyl-, Isopropyl-, n-Butyl-, sec.-Butyl- und 2-Ethylhexylrest sowie Octadecylreste; Cycloalkylreste mit 5 bis 8 Kohlenstoffatomen je Rest, wie der Cyclohexyl- und Cycloheptylrest sowie Methylcyclohexylreste; Kohlenwasserstoffreste mit aliphatischen Doppelbindungen und 2 bis 18 Kohlenstoffatomen je Rest, wie der Vinyl- und Allylrest; Arylreste mit 6 bis 12 Kohlenstoffatomen je Rest, wie der Phenylrest und Xenylreste; Alkarylreste mit 7 bis 18 Kohlenstoffatomen je Rest, wie Tolylreste; und Aralkylreste mit 7 bis 18 Kohlenstoffatomen je Rest, wie der Benzyl- und beta-Phenylethylrest.

Beispiele für halogenierte Kohlenwasserstoffreste R und $R^5$ sind der 3-Chlorpropyl- und 3,3,3-Trifluorpropylrest sowie o-, p- und m-Chlorphenylreste.

Vorzugsweise ist $R^1$ Wasserstoff. Beispiele für halogenierte Phenylreste sind o-, m- und p-Chlorphenyl-reste.

Vorzugsweise ist auch $R^2$ Wasserstoff. Das wichtigste Beispiel für einen Alkylrest $R^2$ ist der Methylrest.

Vorzugsweise ist $R^3$ ein Rest der Formel $-(CH_2)_p-$, wobei p eine ganze Zahl im Wert von 1 bis 6, meist 2 bis 6, insbesondere 3 ist. $R^3$ kann aber auch z.B. ein verzweigter Alkylenrest, wie der Rest der Formel $-CH_2C(CH_3)_2CH_2-$, Arylreste, wie Phenylenreste, Alkarylenreste, wie Reste der Formel $-(CH_2)_2C_6H_4-$ oder Aralkylreste, wie Reste der Formel $-C_6H_4(CH_3)-$ sein. Beispiele für halogenierte Reste $R^3$ sind o-, p- und m-Chlorphenylenreste.

Die Beispiele für Kohlenwasserstoffreste $R^3$ gelten alle auch für die Reste $R^4$, wobei wieder der Rest der Formel $-(CH_2)_3-$wegen der leichten Zugänglichkeit besonders bevorzugt ist.

Das wichtigste Beispiel für einen durch die Gruppe

$HR^1C = CR^2COO-$

substituierten Kohlenwasserstoffrest $R^5$ ist der Rest der Formel

$H_2C = CHCOO(CH_2)_3-$.

Vorzugsweise sind mindestens 95 % der Anzahl der Reste R und $R^5$ Methylreste.

Vorzugsweise liegen 1 bis 30, insbesondere 2 bis 10 Einheiten der Formel

$HSR^4SiRO$

und 10 bis 1000, insbesondere 50 bis 300 Einheiten der Formel

$R_2^5 SiO$

je Molekül vor.

Vorzugsweise beträgt das Verhältnis der Einheiten der Formel

$HSR^4SiRO$

zu den Einheiten der Formel

3

$R_2^5 SiO$

1 : 1000 bis 1 : 1, insbesondere 1 : 100 bis 1 : 30.

Die bevorzugten Organopolysiloxane mit Einheiten der Formeln

$HR^1C = CR^2COOR^3R_2SiO_{1/2}$ ,
$HSR^4SiRO$ und $R_2^5 SiO$

der in mindestens einem der Patentansprüche näher definierten Art können durch die Formel

$$H_2C = CHCOO(CH_2)_pSiR_2O\{SiR[(CH_2)_3SH]O\}_m(SiR_2^5 O)_nSiR_2(CH_2)_pOOCCH = CH_2$$

wiedergegeben werden, worin R, $R^5$ und p jeweils die oben dafür angegebene Bedeutung haben, m eine ganze Zahl im Wert von 1 bis 30, insbesondere 2 bis 10, und n eine ganze Zahl im Wert von 10 bis 1000, insbesondere 50 bis 300, ist und wobei das Verhältnis von m : n 1 : 1000 bis 1 : 1, insbesondere 1 : 100 bis 1 : 30 ist.

Obwohl durch die oben verwendete Formel wie üblich nicht dargestellt, können zusätzlich zu den darin angegebenen Siloxaneinheiten bis zu 5 Molprozent andere, meist jedoch lediglich als mehr oder weniger schwer vermeidbare Verunreinigungen vorhandene Siloxaneinheiten, wie Einheiten der Formel $RSiO_{3/2}$, worin R die oben dafür angegebene Bedeutung hat, oder $SiO_{4/2}$, vorliegen.

die Organopolysiloxane mit Einheiten der Formeln

$HR^1C = CR^2COOR^3R_2SiO_{1/2}$ ,
$HSR^4SiRO$ und $R_2^5 SiO$

der in mindestens einem der Patentansprüche näher definierten Art können beispielsweise dadurch hergestellt werden, daß Organo(poly)siloxane der Formel

$$H_2C = CHCOO(CH_2)_pSiR_2O(SiR_2^5 O)_xSiR_2(CH_2)_pOOCCH = CH_2 ,$$

worin R, $R^5$ und p jeweils die oben dafür angegebene Bedeutung haben und x 0 oder eine ganze Zahl im Wert von 1 bis 1000 ist, mit linearem Organo(poly)siloxan der Formel

$$HO\{SiR[(CH_2)_3SH]O\}_m(R_2^5 O)_xH ,$$

worin $R^5$, m und x jeweils die oben dafür angegebene Bedeutung haben, oder cyclischem Organopolysiloxan aus Einheiten der Formel

$$SiR[(CH_2)_3SH]O$$

gegebenenfalls neben Einheiten der Formel

$$SiR_2^5 O ,$$

wobei R und $R^5$ jeweils die oben dafür angegebene Bedeutung haben und die Gesamtzahl der Siloxaneinheiten in solchem cyclischem Organopolysiloxan 3 bis 6 je Molekül beträgt, und gegebenenfalls linearem oder cyclischem Organo(poly)siloxan der Formel

$$HO(SiR_2^5 O)_nH \text{ bzw. } (SiR_2^5 O)_q ,$$

worin $R^5$ und n jeweils die oben dafür angegebene Bedeutung haben und q eine ganze Zahl im Wert von 3 bis 6 ist, in bekannter Weise äquilibriert wird.

Bei diesem Verfahren werden die Reaktionsteilnehmer vorzugsweise in Mengen von 0,5 bis 15 HS-Gruppen, insbesondere 1 bis 5 HS-Gruppe(n) je Acryloxygruppe eingesetzt.

Die Anzahl der $SiR_2^5 O$-Einheiten in den Reaktionsteilnehmern entspricht dem gewünschten Verhältnis von m : n im Endprodukt.

Bei dem Äquilibrieren der vorstehend definierten Art werden als Katalysatoren vorzugsweise saure Katalysatoren eingesetzt. Beispiele für solche die Äquilibrierung fördernde Katalysatoren sind Salzsäure, Schwefelsäure, Phosphorsäure, Trifluormethansulfonsäure, Phosphornitridchloride und unter den Reaktionsbedingungen feste, saure Katalysatoren, wie säureaktivierte Bleicherde, saure Zeolithe, sulfonierte Kohle und sulfoniertes Styrol-Divinylbenzol-Mischpolymerisat. Bevorzugt sind Phosphornitridchloride. Werden Phosphornitridchloride als Katalysatoren bei der Äquilibrierung der oben definierten Art eingesetzt, so vorzugsweise in Mengen von 5 bis 1000 Gewichts-ppm (=Teilen je Million), insbesondere 50 bis 200 Gewichts-ppm, jeweils bezogen auf das Gesamtgewicht der eingesetzten Organosiliciumverbindungen.

Zur Beschleunigung der Äquilibrierung kann auf 70° bis 150°C erwärmt werden. Das Äquilibrieren wird vorzugsweise in 5 bis 20 Gewichtsprozent, bezogen auf das Gesamtgewicht der jeweils eingesetzten Organosiliciumverbindungen, an mit Wasser nicht-mischbarem Lösungsmittel, wie Toluol, durchgeführt, um eine vorzeitige Vernetzung des Reaktionsprodukts zu verhindern und um das Austragen von bei der Reaktion gebildetem Wasser zu erleichtern.

Das Äquilibrieren wird der Einfachheit halber vorzugsweise beim Druck der umgebenden Atmosphäre, also bei 1020 hPa (abs.) oder etwa 1020 hPa (abs.) durchgeführt. Falls erwünscht, können aber auch höhere oder niedrigere Drücke angewendet werden.

Vor dem Aufarbeiten des bei dem Äquilibrieren erhaltenen Gemisches kann der Katalysator unwirksam gemacht werden, z.B. durch Zugabe von Trioctylamin oder Triisononylamin, insbesondere im Fall der Verwendung von Phosphornitridchloriden als Äquilibrierungs-Katalysatoren.

Es kann eine Art von Organopolysiloxanen mit Einheiten der Formeln

$$HR^1C = CR^2COOR^3R_2SiO_{1/2} \ ,$$
$$HSR^4SiRO \ und \ R^5_2SiO$$

der in mindestens einem der Patentansprüche näher definierten Art verwendet werden. Es können aber auch Gemische aus mindestens zwei verschiedenen Arten derartiger Organopolysiloxane verwendet werden.

Vorzugsweise haben die Organopolysiloxane aus Einheiten der Formeln

$R^6_3SiO_{1/2}$ und $R^6SiO_{3/2}$ oder $SiO_{4/2}$ oder $R^6SiO_{3/2}$ und $SiO_{4/2}$ eine Viskosität von 100 bis 5000 mPa.s bei 25°C.

Die Beispiele für Kohlenwasserstoffreste R und $R^5$ gelten im vollen Umfang auch für die Kohlenwasserstoffreste $R^6$. Die Beispiele für halogenierte Kohlenwasserstoffreste R und $R^5$ gelten ebenfalls im vollen Umfang auch für halogenierte Kohlenwasserstoffreste $R^6$. Das wichtigste Beispiel auch für einen durch die Gruppe

$$HR^1C = CR^2COO-$$

substituierten Kohlenwasserstoffrest $R^6$ ist der Rest der Formel

$$H_2C = CHCOO(CH_2)_3-.$$

Ein weiteres Beispiel für einen derartigen substituierten Kohlenwasserstoffrest ist der gamma-Methacryloxypropylrest.

Auch als Rest $R^6$ der Formel

$$HSR^4-$$

ist der Rest der Formel

$$HS(CH_2)_3-$$

bevorzugt, obwohl die oben angegebenen Beispiele für zweiwertige Kohlenwasserstoffreste $R^3$ im vollen Umfang auch für die Kohlenwasserstoffreste $R^4$ in den Resten der Formel

$$HSR^4-$$

als Reste $R^6$ gelten.

Die Reste der Formel

$$HSR^4-$$

können in Einheiten der Formeln

$$R_3^6 SiO_{1/2} \text{ oder } R^6 SiO_{3/2}$$

oder in beiden Arten dieser Siloxaneinheiten vorliegen.

Vorzugsweise sind 1 bis 10 % der Anzahl der Reste $R^6$ Reste der Formel

$$HSR^4-,$$

insbesondere der Formel

$$HS(CH_2)_3-\ ,$$

die übrigen Reste $R^6$ sind vorzugsweise Methylreste.

Vorzugsweise enthalten die Organopolysiloxane aus Einheiten der Formeln

$$R_3^6 SiO_{1/2} \text{ und } R^6 SiO_{3/2} \text{ oder } SiO_{4/2} \text{ oder } R^6 SiO_{3/2} \text{ und } SiO_{4/2}$$

10 bis 500 Einheiten der Formel

$$R_3^6 SiO_{1/2}$$

und insgesamt 10 bis 500 Einheiten der Formeln

$$R^6 SiO_{3/2} \text{ und } SiO_{4/2}$$

je Molekül.

Weiterhin ist bevorzugt, daß das Verhältnis der Einheiten der Formel $R_3^6 SiO_{1/2}$ zu der Gesamtzahl der Einheiten der Formeln

$$R^6 SiO_{3/2} \text{ und } SiO_{4/2}$$

100 : 1 bis 1 : 10 beträgt.

Die Organopolysiloxane aus Einheiten der Formeln

$$R_3^6 SiO_{1/2} \text{ und } R^6 SiO_{3/2} \text{ und/oder } SiO_{4/2}$$

können beispielsweise durch Umsetzung von Silan der Formel

$$R^5 Si(OR^7)_3\ ,$$

worin $R^5$ die oben dafür argegebene Bedeutung hat und $R^7$ gleiche oder verschiedene Alkylreste mit 1 bis 4 Kohlenstoffatomen je Rest bedeutet, wie Methyltrimethoxysilan, mit Silan der Formel

$$R^8 Si(OR^7)_3\ ,$$

worin $R^7$ die vorstehen dafür angegebene Bedeutung hat und $R^8$ einen Rest der Formel

$$HSR^4-$$

($R^4$ hat die oben dafür angegebene Bedeutung) bedeutet, wie gamma-Mercaptopropyltrimethylsilan, oder/und einem Silan der Formel

$$Si(OR^7)_4\ ,$$

wobei $R^7$ die oben dafür angegebene Bedeutung hat, wie Tetraethoxysilan, einem Disiloxan der Formel

6

$$R_3^5\,SiOSiR_3^5\,,$$

wobei $R^5$ die oben dafür angegebene Bedeutung hat, wie Hexamethyldisiloxan, und Wasser in Gegenwart eines Katalysators für derartige Umsetzungen, wie konzentrierte Salzsäure, sowie gegebenenfalls eines gegenüber den Reaktionsteilnehmern inerten, mit Wasser mischbaren Lösungsmittel, wie Ethanol, in an sich bekannter Weise hergestellt werden.

Auch vor der Aufarbeitung des bei dieser Umsetzung erhaltenen Gemisches kann der Katalysator unwirksam gemacht werden, z.B. durch Zugabe von Calciumcarbonat.

Es kann eine Art von Organopolysiloxan aus Einheiten der Formeln

$$R_3^6\,SiO_{1/2}\ \text{und}\ R^6\,SiO_{3/2}$$

verwendet werden. Es kann aber auch ein Gemisch aus mindestens 2 verschiedenen Arten derartiger Organopolysiloxane verwendet werden.

Anstelle von Organopolysiloxan aus Einheiten der Formeln

$$R_3^6\,SiO_{1/2}\ \text{und}\ R^6\,SiO_{3/2}$$

oder im Gemisch mit derartigem Organopolysiloxan kann eine Art von Organopolysiloxan aus Einheiten der Formeln

$$R_3^6\,SiO_{1/2}\ \text{und}\ SiO_{4/2}$$

oder ein Gemisch aus mindestens zwei verschiedenen Arten der zuletzt genannten Organopolysiloxane verwendet werden.

Anstelle von Organopolysiloxan aus Einheiten der Formeln

$$R_3^6\,SiO_{1/2}\ \text{und}\ R^6\,SiO_{3/2}\ \text{bzw.}\ SiO_{4/2}$$

oder im Gemisch mit derartigem Organopolysiloxan kann schließlich auch eine Art von Organopolysiloxan aus Einheiten der Formeln

$$R_3^6\,SiO_{1/2}\,,\ R^6\,SiO_{3/2}\ \text{und}\ SiO_{4/2}$$

oder ein Gemisch aus mindestens zwei verschiedenen Arten der zuletzt genannten Organopolysiloxane verwendet werden.

Vorzugsweise sind die Organopolysiloxane aus Einheiten der Formeln $R_3^6\,SiO_{1/2}$ und $R^6\,SiO_{3/2}$ und/oder $SiO_{4/2}$ möglichst frei von direkt an Silicium gebundenen Gruppen, wie Hydroxyl- oder Alkoxygruppen.

Vorzugsweise enthalten die erfindungsgemäßen Zusammensetzungen Organopolysiloxan aus Einheiten der Formeln $R_3^6\,SiO_{1/2}$ und $R^6\,SiO_{3/2}$ und/oder $SiO_{4/2}$ in Mengen von 1 bis 1000 Gewichtsprozent, bezogen auf das Gewicht der Organopolysiloxane mit Einheiten der Formeln

$$HR^1C = CR^2COOR^3R_2\,SiO_{1/2},\ HSR^4\,SiRO\ \text{und}\ R_2^5\,SiO.$$

Je höher der Anteil der Organopolysiloxane aus Einheiten der Formeln

$R_3^6\,SiO_{1/2}$ und $R^6\,SiO_{3/2}$ und/oder $SiO_{4/2}$ ist, um so höher ist der Trennwert der aus diesem Gemisch hergestellten Überzüge.

Die erfindungsgemäßen durch Bestrahlung vernetzbaren Zusammensetzungen können überall angewendet werden, wo die Herstellung von Klebstoffe abweisenden Überzügen mit einem Trennwert, der höher ist als der Trennwert von Klebstoffe abweisenden Überzügen, bei denen keine Maßnahmen zur Erhöhung des Trennwertes getroffen wurden, erwünscht ist, wie bei Trägern von mit druckempfindlichem Klebstoff beschichtetem Papier, z.B. Aufklebern, einschließlich Preisauszeichnungs-Etiketten, oder für die Beschichtung der nicht mit Klebstoff beschichteten Seiten von mit druckempfindlichem Klebstoff beschichtetem Papier.

Die Oberflächen, auf welche die erfindungsgemäßen Zusammensetzungen zwecks Herstellung von Klebstoffe abweisenden Überzügen aufgebracht werden können, können sein diejenigen z.B. von Papier, Kunststoffolien, wie Polyethylenfolien oder Polypropylenfolien, oder von mit Polyethylen beschichtetem Kraftpapier. Bei dem vorstehend erwähnten Polyethylen kann es sich jeweils um Hoch-, Mittel- oder Niederdruck-Polyethylen handeln. Bei Papier kann es sich um minderwertige Papiersorten, wie saugfähige Papiere, einschließlich rohem, d.h. nicht mit Chemikalien und/oder polymeren Naturstoffen vorbehandeltes Kraftpapier mit einem Gewicht von 60 bis 150 g/m$^2$, ungeleimte Papiere, Papiere mit niedrigem Mahlgrad, holzhaltige Papiere, nicht-satinierte oder nicht-kalandrierte Papiere, Papiere, die durch Verwendung eines Trockenglättzylinders bei ihrer Herstellung ohne weitere aufwendige Maßnahmen auf einer Seite glatt sind und deshalb als "einseitig maschinenglatte Papiere" bezeichnet werden, unbeschichtete Papiere oder aus Papierabfällen oder Altpapier hergestellte Papiere handeln. Bei mit den erfindungsgemäßen Zusammensetzungen zu behandelndem Papier kann es sich aber auch selbstverständlich um hochwertige Papiersorten, wie saugarme Papiere, geleimte Papiere, Papiere mit hohem Mahlgrad, holzfreie Papiere, kalandrierte oder satinierte Papiere, Zellglas, Pergaminpapiere, pergamentisierte Papiere oder vorbeschichtete Papiere, handeln.

Das Auftragen der erfindungsgemäßen Zusammensetzungen auf die zu überziehenden Oberflächen kann in beliebiger, für die Herstellung von Überzügen aus flüssigen Stoffen geeigneter und vielfach bekannter Weise erfolgen, beispielsweise durch Tauchen, Streichen, Gießen, Sprühen, Aufwalzen, Drucken z.B. mittels einer Offsetgravur-Überzugsvorrichtung, Messer- oder Rakelbeschichtung, einschließlich derjenigen mit einem Meyer-Stab (englisch: Meyer-rod) oder mittels einer Luftbürste. Erfolgt das Auftragen mittels einer Offsetgravur-Überzugsvorrichtung,so kann das Substrat mit der zu überziehenden Oberfläche mit höherer Geschwindigkeit laufen als der Formzylinder.

Bei dem Auftragen der erfindungsgemäßen Zusammensetzungen auf die zu überziehenden Oberflächen können die Zusammensetzungen gegebenenfalls in einem Lösungsmittel gelöst sein oder in einer Emulsion, einschließlich einer wäßrigen Emulsion, vorliegen. Vorzugsweise sind jedoch keine Lösungsmittel oder andere Verdünnungsmittel vorhanden.

Bei der zur Vernetzung der erfindungsgemäßen Zusammensetzungen angewendeten Bestrahlung handelt es sich vorzugsweise um solche mit Ultraviolett-Licht. Die Bestrahlung kann aber auch z.B. mit Elektronenstrahlen, gamma-Strahlen, Röntgenstrahlen, Licht mit einer Wellenlänge von 400 bis 600 Nanometer, also sogenanntem "Halogenlicht", oder Anwendung von mindestens zwei verschiedenen Arten derartiger Strahlen erfolgen.

Bei Bestrahlung mit Elektronenstrahlen sind 1 bis 4 MRad ausreichend.

Als Ultraviolettlicht ist solches mit Wellenlängen im Bereich von 200 bis 400 Nanometer bevorzugt. Es kann z.B. in Xenon-, Quecksilberniederdruck-, Quecksilbermitteldruck-oder Quecksilberhochdrucklampen erzeugt werden.

Wenn die erfindungsgemäßen Zusammensetzungen durch Bestrahlung mit Ultraviolettlicht oder sogenanntem "Halogenlicht" oder beiden Strahlen vernetzt werden sollen, müssen sie mindestens einen Photoinitiator enthalten. Als Photoinitiatoren können sie dabei beliebige Photoinitiatoren enthalten, die in durch Licht vernetzbaren Zusammensetzungen vorliegen können. Beispiele für Photoinitiatoren sind Anthrachinon und substituierte Anthrachinone, wie Chloranthrachinon; Benzophenon und substituierte Benzophenone, wie Hydroxybenzophenone, 2,4-Bis-(trimethylsiloxy)-benzophenon, 4-Methylbenzophenon, 4-Chlorbenzophenon, 4,4'-Dimethoxybenzophenon und 4-Chlor-4'-benzylbenzophenon; Xanthon und substituierte Xanthone, wie 3-Chlorxanthon, 3,9-Dichlorxanthon und 3-Chlor-8-nonylxanthon; Acetophenon und substituierte Acetophenone, wie 2-Hydroxy-2-methyl-1-phenylpropan-1-on, Trichlorbutylacetophenon, 3-Methylacetophenon, 4-Methylacetophenon und 3-Bromacetophenon; Benzoin und substituierte Benzoine, wie Benzoinalkylether, z.B. Benzoinmethylether, Benzoine, in denen das Wasserstoffatom der Hydroxylgruppe des Benzoins durch ein Siliciumatom eines cyclischen Organopolysiloxans ersetzt ist, wie sie in DE-OS 31 23 676 (offengelegt 8. April 1982, Shin-Etsu Chemical Co., Ltd.) beschrieben sind, und Benzoin-Derivate, die durch Umsetzung von z.B. Benzoin mit z.B. Triethanolamin in Abwesenheit von direkt an Silicium gebundenem Halogen, von Säure, die saurer ist als Benzoin und von Base, die basischer ist als Triethanolamin, erhältlich sind; Thioxanthon und substituierte Thioxanthone; Benzil und substituierte Benzile, wie Benzilketale; Fluorenon und substituierte Fluorenone. Zusätzlich zu den bereits genannten einzelnen Beispielen für Photoinitiatoren seien als weitere einzelne Beispiele für Photoinitiatoren genannt: Mesityloxid, Propiophenon, Benzaldehyd, Carbazol und Michler's Keton.

Unter den Photoninitiatoren sind solche bevorzugt, die in den erfindungsgemäßen Zusammensetzungen löslich sind, was sich durch einfache Handversuche leicht feststellen läßt.

Wenn die erfindungsgemäßen Zusammensetzungen Photoinitiator enthalten, so vorzugsweise in Mengen von 0,5 bis 2 Gewichtsprozent, bezogen auf das Gesamtgewicht der Organopolysiloxane.

Zusätzlich zu Organopolysiloxanen und erforderlichenfalls Photoinitiator können die erfindungsgemäßen Zusammensetzungen gegebenenfalls weitere Stoffe enthalten. Beispiele für derartige weitere Stoffe sind insbesondere Mittel zur Verbesserung der Haftung auf den Unterlagen, auf denen sie erzeugt wurden, wie gamma-Mercaptopropyltrimethoxysilan, Butandioldiacrylsäureester und gamma-Glycidoxypropyltriacetoxysilan.

In den folgenden Beispielen beziehen sich alle Angaben von Teilen und Prozentsätzen auf das Gewicht, soweit nichts anderes angegeben ist.

Beispiel 1

a) Eine Mischung aus 410,4 g eines Mischhydrolysats von 29 Mol Dimethyldichlorsilan und 1 Mol gamma-Mercaptopropylmethyldimethoxysilan, das in den endständigen Einheiten je eine Si-gebundene Hydroxylgruppe enthält, 60 g des Organopolysiloxans der Formel

$$H_2C = CHCOO(CH_2)_3 Si(CH_3)_2 O[Si(CH_3)_2 O]_9 Si(CH_3)_2 (CH_2)_3 OOCHC = CH_2 \ ,$$

444 g in den endständigen Einheiten je eine Si-gebundene Hydroxylgruppe aufweisendem Dimethylpolysiloxan mit durchschnittlich 100 Si-Atomen je Molekül und 150 g Toluol wird nach Vermischen mit 0,36 ml einer 15%-igen Lösung von Phosphornitridchloriden in Methylenchlorid zum Sieden unter Rückfluß 2 Stunden erwärmt, wobei das bei der Umsetzung gebildete Wasser in einer Dean-Stark-Falle aufgefangen wird. Dann wird der Katalysator mit 0,5 Triisononylamin unwirksam gemacht und die Lösung mit Hilfe von Aktivkohle und Diatomeenerde filtriert. Danach werden aus der Lösung die bis zu 80°C bei 100 Pa (abs.) siedenden Bestandteile abdestilliert. Das in einer Ausbeute von 825 g (90 % d.Th.) zurückbleibende, klare, farblose Öl hat eine Viskosität von 800 mPa.s bei 25°C. Es enthält aufgrund des magnetischen Kernresonanzspektrums zusätzlich zu den endständigen gamma-Acryloxypropyldimethylsiloxaneinheiten durchschnittlich 230 Dimethylsiloxaneinheiten und 8 [HS(CH$_2$)$_3$]CH$_3$SiO-Einheiten je Molekül.

b) Zu einer Mischung aus 91,5 kg (514 Mol) Methyltrimethoxysilan, 10,1 kg (51,5 Mol) gamma-Mercaptopropyltrimethoxysilan und 15,3 kg (94,4 Mol) Hexamethyldisiloxan werden innerhalb einer Stunde 51 kg eines Gemisches aus 29,5 % (830 Mol) Wasser, 61 % (674 Mol) Ethanol und 9,5 % (51 Mol) konzentrierter Salzsäure gegeben. Nach Beendigung der Zugabe wird die so erhaltene Mischung 1 Stunde auf 80°C unter Rückfluß erwärmt. Die nach dem Erwämen unter Rückfluß erhaltene Mischung wird unter Rühren mit 10 kg (94,6 Mol) Natriumcarbonat vermischt und dann durch eine Schicht aus Natriumsulfat filtriert. Aus dem Filtrat werden die bis zu 60°C bei 133 Pa (abs.) siedenden Bestandteile abdestilliert. Das in einer Ausbeute von 58,5 kg (83,9 % d.Th.) zurückbleibende, leicht trübe, farblose Öl hat eine Viskosität von 560 mPa.s bei 25°C.

c) 50 Teile des Organopolysiloxans, dessen Herstellung vorstehend unter b) beschrieben wurde, werden mit 100 Teilen des Organopolysiloxans, dessen Herstellung oben unter a) beschrieben wurde, 4 Teilen 2-Hydroxy-2-methyl-1-phenylpropan-1-on und 4 Teilen gamma-Mercaptopropyltrimethoxysilan vermischt.

Das so erhaltene Gemisch wird mittels eines Glasstabs auf doppelseitig satiniertes Kraftpapier aufgetragen. Bei Bestrahlung durch eine Quecksilbermitteldruck-Ultraviolettlampe mit einer Leistung von 80 Watt/cm Leuchtlänge und einem Maximum der Leistung bei 366 nanometer in einem Abstand von 10 cm von dem Papier wird das auf das Papier aufgebrachte Gemisch innerhalb von 0,5 Sekunden zu einem abriebfestem Überzug vernetzt.

Prüfwerte nach FINAT 10 und 11, abgedruckt in "Suppliers and Users Technical Manual", Juni 1980, Seite 21 bis 24, unter Verwendung von handelsüblichem selbstklebendem (englisch: pressure sensitive) 2,5 cm breitem Klebeband ("Tesafilm rot Nr. 154", Beiersdorf AG, Hamburg, BRD; zumindest der Wortteil "Tesa" ist ein Registriertes Warenzeichen) und handelsüblichem Heißschmelzkleber:

|  | Klebeband | Heißschmelzkleber |
|---|---|---|
| Trennwert, cN/cm | 26,8 | 13,2 |
| Restklebkraft | 85 % | - |

Diese Werte sind auch nach 4-wöchiger Lagerung des überzogenen Papiers bei 30°C noch unverändert.

Vergleichsversuch

Die in Beispiel 1 unter c) beschriebene Arbeitsweise wird wiederholt mit der Abänderung, daß kein Organopolysiloxan, dessen Herstellung in Beispiel 1 unter b) beschrieben wurde, mitverwendet wird.

Prüfwerte, bestimmt wie in Beispiel 1 angegeben:

|  | Klebeband | Heißschmelzkleber |
|---|---|---|
| Trennwert, cN/cm | 14,2 | 4,5 |
| Restklebkraft | 91 % | - |

Die durch den erfindungsgemäßen Zusatz erzielte Erhöhung des Trennwerts beträgt also 89 % beim Klebeband und 193 % beim Heißschmelzkleber.

Beispiel 2

a) Zu einer Mischung aus 147 g gamma-Mercaptopropyldimethylethoxysilan, 170 g Hexamethyldisiloxan und 416 g Tetraethoxysilan wird innerhalb einer Stunde ein Gemisch aus 100 g Wasser, 200 g Ethanol und 10 g konzentrierter Salzsäure tropfenweise gegeben. Das so erhaltene Gemisch wird 1 Stunde bei 110°C und dem Druck der umgebenden Atmosphäre (etwa 1000 hPa/abs.) gerührt, wobei die unter diesen Bedingungen siedenden Bestandteile abdestillieren gelassen werden. Danach wird mit Calciumcarbonat neutralisiert und filtriert. aus dem Filtrat werden mittels eines Rotationsverdampfers die bis zu 30°C und 2 hPa (abs.) siedenden Bestandteile abdestilliert. Das in einer Ausbeute von 421 g (93 % d.Th.) zurückbleibende klare, farblose Öl hat eine Vislosität von etwa 350 mPa.s bei 25°C.

b) Die in Beispiel 1 unter c) beschriebene Arbeitsweise wird wiederholt mit den Abänderungen, daß 50 Teile des Organopolysiloxans, dessen Herstellung vorstehend unter a) beschrieben wurde, anstelle der 50 Teile des Organopolysiloxans, dessen Herstellung in Beispiel 1 unter b) beschrieben wurde, und 50 Teile des Organopolysiloxans, dessen Herstellung in Beispiel 1 unter a) beschrieben wurde, anstelle der 100 Teile dieses Organopolysiloxans verwendet werden.

Prüfwerte, bestimmt wie in Beispiel 1 angegeben:

|  | Klebeband | Heißschmelzkleber |
|---|---|---|
| Trennwert, cN/cm | 45,8 | 19,8 |
| Restklebkraft: | 83,6 % | - |

**Patentansprüche**
**Patentansprüche für folgende Vertragsstaaten : AT, BE, CH, DE, FR, GB, IT, LI, NL**

1. Durch Bestrahlung vernetzbare Zusammensetzungen für die Herstellung von Klebstoffe abweisenden Überzügen auf Grundlage von Organopolysiloxan, worin mindestens 95 Molprozent der Siloxaneinheiten solche der Formel

$HR^1C = CR^2COOR^3R_2SiO_{1/2}$ ,

worin R ein einwertiger, gegebenenfalls halogenierter Kohlenwasserstoffrest, $R^1$ Wasserstoff oder ein gegebenenfalls halogenierter Phenylrest, $R^2$ Wasserstoff oder ein Alkylrest mit 1 bis 4 Kohlenstoffatomen je Rest und $R^3$ ein zweiwertiger, gegebenenfalls halogenierter Kohlenwasserstoffrest ist, wobei 2 solcher Siloxaneinheiten je Molekül vorliegen, der Formel

$HSR^4SiRO$ ,

wobei R die oben dafür angegebene Bedeutung hat und $R^4$ ein zweiwertiger Kohlenwasserstoffrest ist, sowie der Formel

$R_2^5SiO$ ,

worin $R^5$ die gleiche Bedeutung wie R hat oder ein durch eine Gruppe der Formel $HR^1C = CR^2COO-$ ($R^1$ und $R^2$ haben jeweils die oben dafür angegebene Bedeutung) substituierter Kohlenwasserstoffrest, sind
und wobei mindestens 95 % der Anzahl der an Silicium gebundenen Sauerstoffatome bei den Siloxaneinheiten mit der HS-Gruppe in der Gruppierung

$\equiv$SiOSi$\equiv$

vorliegen,

**dadurch gekennzeichnet**,

daß diese Zusammensetzungen zusätzlich zu Organopolysiloxan der vorstehend definierten Art mindestens ein Organopolysiloxan aus Einheiten der Formeln

$R_3^6 SiO_{1/2}$ und

$R^6 SiO_{3/2}$ und/oder $SiO_{4/2}$ ,

worin 0,5 bis 50 % der Anzahl der Reste $R^6$ solche der Formel

$HSR^4$-

($R^4$ hat die oben dafür angegebene Bedeutung) sind, während die übrigen Reste $R^6$ die gleiche Bedeutung wie $R^5$ haben, enthalten.

**2.** Zusammensetzungen nach Anspruch 1,
**dadurch gekennzeichnet**,
daß 1 bis 10 % der Anzahl der Reste $R^6$ Reste der Formel

$HS(CH_2)_3$-

sind.

**3.** Zusammensetzungen nach Anspruch 1 oder 2,
**dadurch gekennzeichnet**,
daß in den Organopolysiloxanen aus Einheiten der Formeln

$R_3^6 SiO_{1/2}$ und $R^6 SiO_{3/2}$ und/oder $SiO_{4/2}$

10 bis 500 Einheiten der Formel

$R_3^6 SiO_{1/2}$

und insgesamt 10 bis 500 Einheiten der Formeln

$R^6 SiO_{3/2}$ und $SiO_{4/2}$

vorliegen und das Verhältnis der Einheiten der Formel

$R_3^6 SiO_{1/2}$

zu der Gesamtzahl der Einheiten der Formeln

$R^6 SiO_{3/2}$ und $SiO_{4/2}$

100 : 1 bis 1 : 10 beträgt.

**Patentansprüche für folgenden Vertragsstaat : ES**

**1.** Verwendung von durch Bestrahlung vernetzbaren Zusammensetzungen für die Herstellung von Klebstoffe abweisenden Überzügen auf Grundlage von Organopolysiloxan, worin mindestens 95 Molprozent der Siloxaneinheiten solche der Formel

$HR^1C = CR^2COOR^3R_2 SiO_{1/2}$ ,

worin R ein einwertiger, gegebenenfalls halogenierter Kohlenwasserstoffrest, $R^1$ Wasserstoff oder ein gegebenenfalls halogenierter Phenylrest, $R^2$ Wasserstoff oder ein Alkylrest mit 1 bis 4 Kohlenstoffatomen je Rest und $R^3$ ein zweiwertiger, gegebenenfalls halogenierter Kohlenwasserstoffrest ist, wobei 2 solcher Siloxaneinheiten je Molekül vorliegen, der Formel

$HSR^4SiRO$ ,

wobei R die oben dafür angegebene Bedeutung hat und $R^4$ ein zweiwertiger Kohlenwasserstoffrest ist, sowie der Formel

$R_2^5 SiRO$ ,

worin $R^5$ die gleiche Bedeutung wie R hat oder ein durch eine Gruppe der Formel $HR^1C = CR^2COO$-($R^1$ und $R^2$ haben jeweils die oben dafür angegebene Bedeutung) substituierter Kohlenwasserstoffrest, sind
und wobei mindestens 95 % der Anzahl der an Silicium gebundenen Sauerstoffatome bei den Siloxaneinheiten mit der HS-Gruppe in der Gruppierung

$\equiv SiOSi\equiv$

vorliegen,
**dadurch gekennzeichnet,**
daß diese Zusammensetzungen zusätzlich zu Organopolysiloxan der vorstehend definierten Art mindestens ein Organopolysiloxan aus Einheiten der Formel

$R_3^6 SiO_{1/2}$ und
$R^6 SiO_{3/2}$ und/oder $SiO_{4/2}$ ,

worin 0,5 bis 50 % der Anzahl der Reste $R^6$ solche der Formel

$HSR^4$-

($R^4$ hat die oben dafür angegebene Bedeutung) sind, während die übrigen Reste $R^6$ die gleiche Bedeutung wie $R^5$ haben, enthalten.

2. Verwendung nach Anspruch 1,
   **dadurch gekennzeichnet,**
   daß 1 bis 10 % der Anzahl der Reste $R^6$ Reste der Formel

   $HS(CH_2)_3$-

   sind.

3. Verwendung nach Anspruch 1 oder 2,
   **dadurch gekennzeichnet,**
   daß in den Organopolysiloxanen aus Einheiten der Formel

   $R_3^6 SiO_{1/2}$ und $R^6 SiO_{3/2}$ und/oder $SiO_{4/2}$

   10 bis 500 Einheiten der Formel

   $R_3^6 SiO_{1/2}$

   und insgesamt 10 bis 500 Einheiten der Formel

   $R^6 SiO_{3/2}$ und $SiO_{4/2}$

   vorliegen und das Verhältnis der Einheiten der Formel

$$R_3^6 \, SiO_{1/2}$$

zu der Gesamtzahl der Einheiten der Formel

$$R^6 SiO_{3/2} \text{ und } SiO_{4/2}$$

100 : 1 bis 1 : 10 beträgt.

**Claims**
**Claims for the following Contracting States : AT, BE, CH, DE, FR, GB, IT, LI, NL**

1. Radiation-crosslinkable composition for the preparation of adhesive-repellent coatings based on organopolysiloxane, in which at least 95 mole percent of the siloxane units are those of the formula

$$HR^1C = CR^2COOR^3R_2 \, SiO_{1/2}$$

in which R is a monovalent, optionally halogenated hydrocarbon radical, $R^1$ is hydrogen or an optionally halogenated phenyl radical, $R^2$ is hydrogen or an alkyl radical having 1 to 4 carbon atoms per radical, and $R^3$ is a divalent, optionally halogenated hydrocarbon radical, where 2 siloxane units of the formula

$$HSR^4 \, SiRO$$

in which R has the abovementioned meaning for R, and $R^4$ is a divalent hydrocarbon radical, and of the formula

$$R_2^5 \, SiO$$

in which $R^5$ has the same meaning as R or is a hydrocarbon radical which is substituted by a group of the formula $HR^1C = CR^2COO-$($R^1$ and $R^2$ each have the abovementioned meaning for $R^1$ and $R^2$ respectively), are present per molecule and where at least 95% of the silicon-bound oxygen atoms in the siloxane units having the HS group are present in the

$$\equiv SiOSi\equiv$$

group, characterised in that these compositions contain, in addition to an organopolysiloxane of the type defined above, at least one organopolysiloxane made from units of the formula [sic]

$R_3^6 \, SiO_{1/2}$ and
$R^6 SiO_{3/2}$   and/or
$SiO_{4/2}$,

in which 0.5 to 50% of the $R^6$ radicals are those of the formula

$$HSR^4 -$$

($R^4$ has the abovementioned meaning for $R^4$), while the remaining $R^6$ radicals have the same meaning as $R^5$.

2. Composition according to Claim 1, characterised in that 1 to 10% of the $R^6$ radicals are radicals of the formula

$$HS(CH_2)_3 -.$$

3. Composition according to Claim 1 or 2, characterised in that 10 to 500 units of the formula

$$R_3^6 \, SiO_{1/2}$$

13

and a total of 10 to 500 units of the formula [sic]

$R^6 SiO_{3/2}$ and $SiO_{4/2}$

are present in the organopolysiloxanes made from units of the formula [sic]

$R_3^6 SiO_{1/2}$ and $R^6 SiO_{3/2}$ and/or $SiO_{4/2}$

and the ratio of the units of the formula

$R_3^6 SiO_{1/2}$

to the total number of units of the formula [sic]

$R^6 SiO_{3/2}$ and $SiO_{4/2}$

is 100:1 to 1:10.

**Claims for the following Contracting State : ES**

1.  Use of a radiation-crosslinkable composition for the preparation of adhesive-repellent coatings based on organopolysiloxane, in which at least 95 mole percent of the siloxane units are those of the formula

    $HR^1C = CR^2COOR^3R_2 SiO_{1/2}$

    in which R is a monovalent, optionally halogenated hydrocarbon radical, $R^1$ is hydrogen or an optionally halogenated phenyl radical, $R^2$ is hydrogen or an alkyl radical having 1 to 4 carbon atoms per radical, and $R^3$ is a divalent, optionally halogenated hydrocarbon radical, where 2 siloxane units of the formula

    $HSR^4 SiRO$

    in which R has the abovementioned meaning for R, and $R^4$ is a divalent hydrocarbon radical, and of the formula

    $R_2^5 SiO$

    in which $R^5$ has the same meaning as R or is a hydrocarbon radical which is substituted by a group of the formula $HR^1C = CR^2COO-$($R^1$ and $R^2$ each have the abovementioned meaning for $R^1$ and $R^2$ respectively), are present per molecule and where at least 95% of the silicon-bound oxygen atoms in the siloxane units having the HS group are present in the

    $\equiv SiOSi\equiv$

    group, characterised in that these compositions contain, in addition to an organopolysiloxane of the type defined above, at least one organopolysiloxane made from units of the formula [sic]

    $R_3^6 SiO_{1/2}$ and
    $R^6 SiO_{3/2}$ and/or
    $SiO_{4/2}$,

    in which 0.5 to 50% of the $R^6$ radicals are those of the formula

    $HSR^4-$

    ($R^4$ has the abovementioned meaning for $R^4$), while the remaining $R^6$ radicals have the same meaning as $R^5$.

2.  Use of a composition according to Claim 1, characterised in that 1 to 10% of the $R^6$ radicals are

14

radicals of the formula

$HS(CH_2)_3-.$

3. Use of a composition according to Claim 1 or 2, characterised in that 10 to 500 units of the formula

$R_3^6 SiO_{1/2}$

and a total of 10 to 500 units of the formula [sic]

$R^6 SiO_{3/2}$ and $SiO_{4/2}$

are present in the organopolysiloxanes made from units of the formula [sic]

$R_3^6 SiO_{1/2}$ and $R^6 SiO_{3/2}$ and/or $SiO_{4/2}$

and the ratio of the units of the formula

$R_3^6 SiO_{1/2}$

to the total number of units of the formula [sic]

$R^6 SiO_{3/2}$ and $SiO_{4/2}$

is 100:1 to 1:10.

## Revendications
**Revendications pour les Etats contractants suivants : AT, BE, CH, DE, FR, GB, IT, LI, NL**

1. Compositions réticulables sous l'effet d'un rayonnement, pour la préparation de revêtements repoussant les adhésifs, à base d'un polyorganosiloxane, où au moins 95 % en moles des motifs siloxane sont des motifs de formule

$HR^1C = CR^2COOR^3R_2SiO_{1/2}$

dans laquelle R est un radical hydrocarboné monovalent, éventuellement halogéné, $R^1$ est un hydrogène ou un radical phényle éventuellement halogéné, $R^2$ est un hydrogène ou un radical alkyle ayant 1 à 4 atomes de carbone par radical, et $R^3$ est un radical hydrocarboné divalent, éventuellement halogéné, deux de ces motifs siloxane étant présents par molécule ; la formule

$HSR^4SiRO$

où R a la signification donnée ci-dessus et $R^4$ est un radical hydrocarboné divalent ; et aussi la formule

$R^5_2SiO$

où $R^5$ a la même signification que R, ou encore est un radical hydrocarboné substitué par un groupe de formule $HR^1C = CR^2COO-$ ($R^1$ et $R^2$) ont chacun la signification donnée ci-dessus) ;
et où au moins 95 % du nombre total des atomes d'oxygène liés au silicium, dans les motifs siloxane comportant le groupe HS, sont présents dans le groupement

$\equiv SiOSi\equiv$

caractérisées en ce que ces compositions contiennent, en plus du polyorganosiloxane du type défini ci-dessus, au moins un polyorganosiloxane constitué de motifs de formule

$R^6_3SiO_{1/2}$ et
$R^6 SiO_{3/2}$ et/ou

15

$SiO_{4/2}$

où 0,5 à 50 % du nombre total des radicaux $R^6$ sont des radicaux de formule

$HSR^4-$

($R^4$ a la signification donnée plus haut), tandis que les autres radicaux $R^6$ ont la même signification que $R^5$.

2. Compositions selon la revendication 1, caractérisées en ce que 1 à 10 % du nombre des radicaux $R^6$ sont des radicaux de formule

$HS(CH_2)_3-$

3. Compositions selon la revendication 1 ou 2, caractérisées en ce qu'on a dans les polyorganosiloxanes constitués de motifs de formule

$R^6{}_3SiO_{1/2}$ et $R^6SiO_{3/2}$ et/ou $SiO_{4/2}$

10 à 500 motifs de formule

$R^6{}_3SiO_{1/2}$,

et en tout 10 à 500 motifs de formules

$R^6SiO_{3/2}$ et $SiO_{4/2}$,

le rapport entre le nombre des motifs de formule

$R^6{}_3SiO_{1/2}$

et le nombre total des motifs de formules

$R^6SiO_{3/2}$ et $SiO_{4/2}$

étant de 100:1 à 1:10.

**Revendications pour l'Etat contractant suivant : ES**

1. Utilisation des compositions réticulables sous l'effet d'un rayonnement, pour la préparation de revêtements repoussant les adhésifs, à base d'un polyorganosiloxane, où au moins 95 % en moles des motifs siloxane sont des motifs de formule

$HR^1C = CR^2COOR^3R_2SiO_{1/2}$

dans laquelle R est un radical hydrocarboné monovalent, éventuellement halogéné, $R^1$ est un hydrogène ou un radical phényle éventuellement halogéné, $R^2$ est un hydrogène ou un radical alkyle ayant 1 à 4 atomes de carbone par radical, et $R^3$ est un radical hydrocarboné divalent, éventuellement halogéné, deux de ces motifs siloxane étant présents par molécule ; la formule

$HSR^4SiRO$

où R a la signification donnée ci-dessus et $R^4$ est un radical hydrocarboné divalent ; et aussi la formule

$R^5{}_2SiO$

où $R^5$ a la même signification que R, ou encore est un radical hydrocarboné substitué par un groupe de formule $HR^1C = CR^2COO-$ ($R^1$ et $R^2$) ont chacun la signification donnée ci-dessus) ;

et où au moins 95 % du nombre total des atomes d'oxygène liés au silicium, dans les motifs siloxane comportant le groupe HS, sont présents dans le groupement

$\equiv$SiOSi$\equiv$

caractérisées en ce que ces compositions contiennent, en plus du polyorganosiloxane du type défini ci-dessus, au moins un polyorganosiloxane constitué de motifs de formule

$R^6{}_3SiO_{1/2}$  et
$R^6SiO_{3/2}$  et/ou
$SiO_{4/2}$

où 0,5 à 50 % du nombre total des radicaux $R^6$ sont des radicaux de formule

$HSR^4$-

($R^4$ a la signification donnée plus haut), tandis que les autres radicaux $R^6$ ont la même signification que $R^5$.

2. Utilisation des compositions selon la revendication 1, caractérisées en ce que 1 à 10 % du nombre des radicaux $R^6$ sont des radicaux de formule

$HS(CH_2)_3$-

3. Utilisation des compositions selon la revendication 1 ou 2, caractérisées en ce qu'on a dans les polyorganosiloxanes constitués de motifs de formule

$R^6{}_3SiO_{1/2}$  et $R^6SiO_{3/2}$  et/ou $SiO_{4/2}$

10 à 500 motifs de formule

$R^6{}_3SiO_{1/2}$,

et en tout 10 à 500 motifs de formules

$R^6SiO_{3/2}$  et $SiO_{4/2}$,

le rapport entre le nombre des motifs de formule

$R^6{}_3SiO_{1/2}$

et le nombre total des motifs de formules

$R^6SiO_{3/2}$  et $SiO_{4/2}$

étant de 100:1 à 1:10.